# EUROPEAN PATENT APPLICATION

(11) **EP 3 231 964 A1**
(43) Date of publication of application: **18.10.2017**
(21) Application number: 17165837.0
(22) Date of filing: 10.04.2017
(51) Int. Cl.: E04H 4/16, G06F 1/26

(54) **METHOD FOR MODIFYING AN ONBOARD CONTROL SYSTEM OF A POOL CLEANER, AND POWER SOURCE FOR A POOL CLEANER**

(30) Priority: 11.04.2016 US 201615095398
(71) Applicant: Aqua Products, Inc, Cedar Grove, NJ 07009 (US)
(72) Inventor: HANAN, Ethan, Teaneck, NJ 07666 (US); DURVASULA, Kamesh, Cedar Grove NJ 07009 (US); CORREA, William Londono, Wayne, NJ 07470 (US)
(74) Representative: Balder IP Law, S.L.

(57) **Abstract**

An onboard control system (350) of an electrically powered pool cleaner (3) is configured to operate the pool cleaner in accordance with a setup (A, B, C) of the onboard control system (350). The pool cleaner is configured for receiving electrical power via a cable (2) connecting the pool cleaner to a power source (1).

A method for modifying the setup of the control system (350) comprises:
providing setup data (B) to the power source (1), and
modifying the setup of the onboard control system (350) from the power source (1) via the cable (2), based on the setup data (B).

## Description

### TECHNICAL FIELD

The invention relates to the field of swimming pool cleaners, especially electrically powered robotic swimming pool cleaners arranged for movement on and cleaning of the surface of a swimming pool, including the bottom surface of the swimming pool and optionally wall surfaces of the swimming pool.

### STATE OF THE ART

Electrically driven robotic swimming pool cleaners are well known in the art. Such cleaners generally include a power supply, typically an onboard battery and/or an external power source, often in the form of a portable power source device, placed in the vicinity of the swimming pool. When a power source external to the pool cleaner (such as a pool side power source or a floating power source) is used to power the pool cleaner, the power source is typically connected to the pool cleaner via a cable, for transmission of power and, in some cases, also of signals for controlling the pool cleaner.

This kind of pool cleaner typically comprises a pump for suctioning water and debris into the housing of the pool cleaner, a filter for trapping dirt and debris, and a drive motor and drive means such as wheels and/or tracks.

It is known in the art to provide pool cleaners with sensors that serve to determine the position and/or orientation of the pool cleaner, such as, for example, proximity to the vertical surfaces (the walls) of the swimming pool, inclination in relation to the horizontal plane (for example, tilt sensors), orientation in the horizontal plane (also known as directional orientation), accelerometers, gyroscopes, compasses, etc. Data obtained from the sensors is typically used to direct movement of the pool cleaner according to preset algorithms, that is, in a manner that is determined by a setup of the control system, such as an onboard control system. However, this setup may not always be optimal in view of the specific circumstances of a particular user, for example, in view of a specific shape and/or size of the swimming pool, in view of the characteristics of debris that is to be removed, the amounts thereof, etc. Thus, the user, such as an owner or operator of a swimming pool, may wish to modify the setup of the control system, for example, to minimize the time needed by the pool cleaner to complete a cleaning cycle, and/or to reduce the electrical energy needed for completing a cleaning cycle.

US-2015/0286194-A1 discloses a pool cleaner controlled by a control module placed outside the swimming pool. The control signals from the pool side control module as well as power for driving the pool cleaner are transmitted via a cable extending between the control module and the pool cleaner. It is described how this arrangement can be adapted for wireless control by a user, by inserting a modifying device into the link between the control module and the pool cleaner, whereby this modifying device is arranged for wireless communication with a remote device, such as a cellphone or a remote programmable device. This system makes it possible for a user to remotely control the pool cleaner using a cellphone, so that the user can cause the pool cleaner to operate in a manner differing from the manner defined by the setup of the original control system. However, remote control by the user himself or herself is time-consuming for the user and may indeed be suboptimal in terms of efficiency.

US-2014/0303810-A1 discloses a system for wireless communication with automatic pool cleaners, for example, for changing so-called navigation parameters. Communication takes place between a remote device -to which control software can be downloaded via the internet- and the swimming pool cleaner, via a wireless link. The system is focused on hydraulic cleaners, and the wireless link makes it possible to communicate with the swimming pool cleaner in spite of the lack of any wired connection. However, wireless communication with a swimming pool cleaner operating at the bottom of a swimming pool can sometimes be problematic, and US-2014/0303810-A1 does not explain how to deal with these problems.

US-2009/0057238-A1 discloses a swimming pool cleaner with a control system distributed between a caddy and a robot. Setup parameters can be introduced caddy-side and transmitted to the robot over the power cable, and the robot side control system will then operate according to the transmitted parameters.

EP-1122382-A1 discloses a pool cleaner that receives power from a power source floating in the swimming pool and that includes the control unit, for operating the pool cleaner in accordance with one or more cleaning programs or in accordance with control signals transmitted by an operator through radio signals from a hand-held control set.

### DESCRIPTION OF THE INVENTION

It has been found that there is a need for easy and flexible updating of the setup of the control systems of pool cleaners, for example, to enhance the operation efficiency of the pool cleaners, for example, to incorporate new operation related means such as new programs or algorithms developed at the manufacturer's end or at a third party's end, or for allowing a user (such as a swimming pool owner, operator, or other interested party) to improve the operation of the pool cleaner by incorporating new software such as programs or operation parameters, for example, for adapting a pool cleaner to more or less specific conditions such as to a specific swimming pool type (in terms of for example shape and/or dimensions of the swimming pool), etc. It has also been found that it can be advantageous to allow this kind of updating, adaptation or other kind of modification to be carried out without any need for the person or party in charge to rely on or verify that the pool cleaner as such is available or "on-line" or to directly manipulate the pool cleaner as such.

It is an object of this invention to provide a method for modifying the setup of an onboard control system of a swimming pool cleaner.

A further object of this invention is to provide a method for pre-setting the behavior of the pool cleaner.

A further object of the invention is to enable pre-setting the pool cleaner's response to data read from onboard sensors.

A further object of the invention is to enable presetting of fixed behavior algorithms in the pool cleaner.

A further object of the invention is to enable customization of the pool cleaner's behavior to the characteristics of the swimming pool.

A further object of the invention is to enable presetting of the pool cleaner's behavior parameters based on pool characteristics uploaded by the end user into a computer network system.

A further object of the invention is to enable downloading of pool cleaner behavior parameters from a data network and programming the parameters in an onboard control system of the pool cleaner.

A further object of the invention is to enable communication of pool cleaner health and operation status to a user via a remote computing device.

A further object of the invention is to enable pre-selection of pool cleaner operation characteristics while the pool cleaner is disconnected or in an inoperative or "off" state, and uploading corresponding operation parameters to the pool cleaner when the pool cleaner is connected or put into an operative or "on" state at a later point of time.

A first aspect of the invention relates to a method for modifying a setup of an onboard control system of an automatic pool cleaner, that is, a swimming pool cleaner that comprises an onboard control system that determines the operation of the pool cleaner. The onboard control system is configured to, or adapted to, such as programmed to, operate the pool cleaner in accordance with the setup of the onboard control system. The setup is determined by software, such as one or more parameters and/or programs stored in at least one onboard memory of the pool cleaner, and the setup determines the operation of the swimming pool cleaner, for example, in terms of one or more basic movement patterns and/or in terms of reactions to output from sensors. The pool cleaner is an electrically powered pool cleaner configured for receiving electrical power via a cable connecting the pool cleaner to a power source, that is, to a power source comprising an external power supply for the pool cleaner, for example, a power source device -such as a portable power source device or apparatus-arranged outside the swimming pool or in the water of the swimming pool, such as floating in the water, so that power can be transmitted from the power source to the pool cleaner through a dedicated cable. The power source includes some kind of power supply means, for example, power supply means connected to some kind of power supply grid, such as to the general electrical network or to a local electrical network, and adapted to supply electrical power to the pool cleaner via the cable.

The method comprises:
providing setup data to the power source, the setup data including, for example, one or more programs, algorithms, parameters, etc., and
modifying the setup of the onboard control system from the power source via the cable, based on the setup data, for example, by forwarding the setup data to the onboard control system of the pool cleaner, or by forwarding data or other signals derived from the setup data and/or corresponding to the setup data. In some embodiments, the power source can be more involved with the modification/reprogramming of the onboard control system than in other embodiments. For example, in some embodiments there can be a master-slave relationship in which a substantial part of reprogramming is carried out under the control and/or supervision of the power source, whereas in other embodiments the reprogramming is substantially carried out by the pool cleaner itself, in response to (such as triggered by) signals and/or data received from the power source. For example, in some embodiments, the power source forwards modification data to the pool cleaner via the cable, the modification data being based on the setup data. For example, the modification data may comprise the setup data or part thereof, or they may be derived from the setup data in another way. The modification data can, for example, comprise commands, programs or parts of programs, parameters, etc. In some embodiments, these commands, programs, parts of programs and/or parameters may be part of the setup data or they may even constitute the setup data, and in other embodiments they are derived from the setup data in other ways, such as by conversion tables or similar.

This arrangement has been found to be advantageous in that, for example, the power source may often be more readily available for communication with an external device or system than the swimming pool cleaner, which may often be turned off, disconnected from the power source, and/or placed in water and unable to directly receive for example wirelessly transmitted data. The external device can be, for example, a terminal or other kind of device connected or connectable to the internet, to a local network or to any other kind of source for communication, or to any other kind of device capable of providing the setup data. The power source including the power supply from which power is supplied to the pool cleaner via the cable can easily be arranged to be, for example, continuously or almost continuously ready to receive data transmitted to it from the external device, for example, over a wireless link or via any other suitable link, such as, for example, via connection to an external device via a USB port or any other kind of wired link. The power source can then trigger the modification of the setup of the control system of the pool cleaner the next time the pool cleaner is set into a mode that allows the modification of the setup of the control system, for example, the next time the pool cleaner is turned on and/or connected to the power source via the cable, and/or in response to a trigger action carried out by the user, for example, by pushing a button, entering a code using a keyboard or similar, or operating on any other activation means.

An advantage with the invention is that there is no pre-established link between the availability of the power source and the availability of the pool cleaner, in terms of the availability to receive data from an external device or system such as a user terminal. The availability of the pool cleaner can depend on many circumstances related to its use, for example, use in different swimming pools, maintenance operations, etc. The power source can often be available for receiving setup data even when the pool cleaner as such is not available. Thereby, at least a first part of a process of modifying the setup of the onboard control system of a pool cleaner can be carried out without the pool cleaner as such being available, by transferring the relevant setup data to the power source and, if necessary, by storing the setup data there. The modification process can then be completed once the pool cleaner becomes available, and/or following a trigger action by the user, whereby the user authorizes or triggers completion of the process.

In some embodiments of the invention, the pool cleaner comprises a housing, drive means including wheels and/or tracks, at least one electrically driven motor, at least one pump for pumping water from at least one inlet to at least one outlet through at least one filter for retaining debris. In some embodiments, the onboard control system, the motor, the pump and the filter are arranged within the housing. In some embodiments, the same motor is used for driving the pump and the drive means. In other embodiments, different motors are used for driving drive means and pump.

In some embodiments, the onboard control system is operatively connected to at least one orientation and/or position sensor. The sensor can be selected from a list including magnetometers, accelerometers, angular rate sensors, tilt sensors, proximity sensors, motion sensors, or any combination thereof.

In some embodiments, for the purpose of determining the orientation of the pool cleaner, an accelerometer is used to measure tilt angle about three axes.

In some embodiments, the pool cleaner comprises an angular rate sensor, commonly known as a gyro. Based on the output from such a sensor, the onboard control system can, by integrating the rate and elapsed time, compute an estimate of the orientation and/or position of the pool cleaner.

In some embodiments, the pool cleaner includes at least one proximity sensor, the output of which can be used by the onboard control system to determine the proximity of the pool cleaner to a substantially vertical surface of the pool.

In some embodiments, the pool cleaner comprises an accelerometer or tilt sensor, the output of which can be used by the onboard control system to determine the pool cleaner's orientation about a pitch, yaw and/or roll axis.

In some embodiments, the pool cleaner comprises a magnetometer, commonly known as an electronic compass, the output of which can be used by the onboard control system to determine the orientation of the pool cleaner.

For example, when the pool cleaner in accordance with some embodiments is moving over a substantially horizontal surface, the onboard control system can compute the inclination of the surface on the basis of data read from the tilt sensor or accelerometer, which is commonly configured to provide information about the tilt angle. The onboard control system can also determine when the pool cleaner has translated from a substantially horizontal movement on the pool floor to a substantially vertical movement on a pool wall, based on significant changes in angle read from the tilt sensor or accelerometer, changes in torque measured on the motor, data read from a proximity sensor, or any combination thereof.

In some embodiments, by comparing an angle to the horizontal plane read from the tilt sensor when the pool cleaner translates from vertical to horizontal movement, the onboard control system can determine whether the pool cleaner is at the deeper or shallower end of the pool, as the angle between floor and wall is different at the shallower end than at the deeper end. The onboard control system can retain, in a memory thereof, an indication of whether the pool cleaner is at the shallow end or at the deep end of the pool. The user can, for example, preselect whether the pool cleaner should adapt its movement to spend more time cleaning the deep end or the shallow end of the pool, and upload the corresponding data to the pool cleaner, using the method described above.

Conventionally, robotic pool cleaners are typically programmed to perform most efficiently in square or rectangular pools. As such, they are typically pre-programmed to turn at right angles to a previous heading and continue a path which is perpendicular the original track. However, in a non-rectangular pool such as a round, oval or irregularly shaped pool, this may not be the optimal strategy in order to cover the pool surface in a minimum amount of time and/or using a minimum amount of energy.

Now, as explained above, a pool cleaner can compute the angle by which it turns by reading data from an angular rate sensor, magnetometer, or combination thereof, and perform a turn at any preset angle. Furthermore, the time of travel between turns can be preselected, to provide optimal performance according to the dimensions and/or shape of the pool.

In accordance with some embodiments of the invention, the pool cleaner is in communication with a power source which is positioned outside the pool, such as within a couple of meters from the pool edge; for example, in some countries the applicable regulations establish a minimum distance between a device directly fed by the mains and the edge of the swimming pool, for example 3.6 meters. The power source is connected to the pool cleaner by a cable which can supply power and data. In some embodiments, data is communicated by a separate wire or pair of wires in the cable. In some embodiments, data transmission takes place by modulating a signal on the power wires, that is, using so-called power line communication. The power source itself is, in some embodiments of the invention, in communication with a user terminal, for example, a handheld device such as a smartphone, a tablet, a laptop, or any other kind of computer device. The communication between the power source and the user terminal may be wireless, using for example a protocol such as wifi or Bluetooth, or any other suitable protocol. Alternatively, the communication between the power source and the user terminal may be wired, using a protocol such as USB or any other suitable protocol.

In some embodiments of the invention, the user terminal may be connected to the internet with access to data uploaded by the user or by another entity. The user terminal device may alternatively be programmed by the user and store data in its own memory.

In some embodiments, the user can access a computer program incorporating a graphical user interface, and select parameters based on the pool in which the pool cleaner will operate. For example, the user can specify the minimum and maximum depth of the pool, pool shape, dimensions such as length and width, options regarding the most relevant debris found in the pool (leaves, sand, etc) and/or preferred pool cleaner operation time. Based on for example this kind of data input by the user, the program can then select the optimum parameters for pool cleaner operation, including, but not limited to, angle of turn, percentage of cycle time spent at the deeper or shallower end of the pool, time between turns, and/or time on the pool wall. The user terminal can then transmit the relevant parameters to the power source, where these parameters can be stored in a memory such as a non-volatile memory. The power source may then transmit the setup data comprising the parameters (or other modification data based on, such as derived from, the setup data) to the pool cleaner almost instantaneously, or alternatively retain the setup data in the memory and transmit the setup data (or other modification data based on the setup data) to the pool cleaner the next time the pool cleaner is powered on, or the next time a cleaning cycle is initiated, or in response to a trigger action performed by the user. The power source will transmit the relevant data, such as parameters, to the pool cleaner via the power/data cable.

In some embodiments, the pool cleaner may be configured to transmit information regarding its operation, as detected by its sensors, to the power source. The data transmitted may include indications of errors in the operation of the pool cleaner, and the data may be transmitted by the power source to an external device, such as to the user terminal, for example, to be displayed to the user. The power source and/or the user terminal may be configured to signal discrepancies between the operation of the pool cleaner and the selected parameters, and may suggest selection of alternative parameters. For example, the pool cleaner may detect that the gyro sensor does not register complete turns when the control system operates the pool cleaner to carry out a complete turn, and the user may then be prompted to select a longer operating time.

In some embodiments, an optional command can be provided by means of which the user can select whether the setup data will be retained in the memory of the power source. For example, a user may wish to maintain different sets of setup data corresponding to different setups of the control system, in the memory of the power source, and upload a selected set of setup data to the pool cleaner when desired. For example, some operators may own two or more swimming pools (for example, a larger and deeper pool for adults and a smaller and shallower pool for children) and may desire to adapt the setup of the pool cleaner in accordance with the pool to be cleaned at any given moment. For this purpose, data corresponding to two or more alternative setups can be stored in the memory of the power source and then be used to modify the setup of the pool cleaner whenever desired, for example, in response to an instruction from the user.

The user terminal can, in some embodiments, be configured to access the internet and accept updated program files for operation of the pool cleaner. Typically, these updates may comprise improved algorithms to include further features or to resolve problems. These files can be used as setup data to modify the setup of the control system of the pool cleaner, as explained above. For example, when the pool cleaner is turned on, the power source may begin a sequence of operations in which a command to accept an updated program is sent to the pool cleaner, and the program itself is uploaded to the onboard control system via the cable.

In some embodiments of the invention, and after receiving the setup data, the power source selectively:
- triggers modification of the setup of the onboard control system of the pool cleaner if the pool cleaner is available for receiving corresponding data (for example, the setup data themselves or data derived therefrom) via the cable; or
- stores the setup data in a memory of the power source if the pool cleaner is not available for receiving the corresponding data via the cable, and subsequently triggers modification of the setup of the onboard control system of the pool cleaner based on the stored setup data, when the pool cleaner becomes available for receiving the corresponding data via the cable. Frequently, pool cleaners are powered off or otherwise disconnected from the power source, for example, during storage, maintenance, etc. In many embodiments of the invention, the power source can be configured to trigger modification of the setup of the control system when receiving the corresponding data, for example, immediately or almost immediately after receiving them, if the pool cleaner is "available". If the pool cleaner is not available, the setup data -in some embodiments, modification data derived therefrom- can be stored in the power source, such as in a non-volatile memory thereof, and then be used to trigger modification of the setup of the control system of the pool cleaner once the pool cleaner becomes available, for example, once the cable thereof is plugged into the power source and/or once the pool cleaner is turned into an "on" state. Thereby, the user or other party who desires to update or otherwise modify the setup of the control system can do so, independently of whether the pool cleaner is available or not. If the pool cleaner is not available, the relevant setup data will be stored in the power source and used to modify the setup of the control system at later stage. However, the user will not have to reinitiate the process, that is, once the user has carried out his or her part of the task operating on his or her terminal, the rest of the process can be transparent to the user, as it is carried out between the power source and the pool cleaner. However, in some embodiments, the user can receive, for example, at his or her terminal, a confirmation message or similar once the modification of the setup of the control system has been terminated. Also, in some embodiments, completion of the operation may require an additional confirmation or trigger action by the user, such as the selection of an "upload now" mode.

The expression "trigger modification" is intended to encompass any action of modification of the onboard control system that is initiated from the power source, and includes the forwarding of modification data including or derived from the setup data, from the power source to the pool cleaner, via the cable.

In some embodiments of the invention, the setup data are stored in a memory of the power source, and the step of modifying the setup of the onboard control system is carried out in response to a trigger action carried out by a user, for example, a trigger action comprising pushing a button, keying a code, sending a trigger command from an external device, etc. Thus, a user can upload the setup data to the power source, but postpone completion of the process of modifying the setup of the onboard control system until a later stage. For example, a user can upload an "autumn weather cleaning program" or "autumn weather cleaning parameters" to the power source, but postpone the actual change of the setup of the onboard control system of the pool cleaner until the autumn arrives and leaves start to accumulate in the swimming pool.

In some embodiments of the invention, the step of providing setup data to the power source comprises selecting operating parameters using an interface program running on a terminal external to the power source. Thereby, a user, such as the person in charge of the pool cleaning, can use the interface program and select operating parameters for the pool cleaner interacting with the interface program, based on characteristics of the pool such as dimensions, shape, etc., or based on other conditions affecting the cleaning such as expected kind and/or quantity of debris, and thereby obtain setup data comprising operating parameters potentially appropriate for efficient pool cleaning under the relevant conditions. For example, the parameters can be obtained from an entity such as the manufacturer or supplier of the pool cleaner, or from a related entity, via the internet or via another appropriate link. The user can carry out these operations using any suitable terminal, such as a smartphone, tablet, laptop, or other kind of computing device. The setup data can then be uploaded to the power source using any suitable link, such as a wireless link, a wired link, a memory stick, etc.

In some embodiments of the invention, the power source includes means for wireless communication, and the step of providing setup data to the power source comprises providing the setup data to the power source over a wireless link, via the means for wireless communication. That is, the user can, for example, obtain the relevant setup data/parameters using a terminal connected to, for example, the internet or any other suitable link or network, and forward the setup data to the power source in a wireless manner, for example, via Bluetooth or any other suitable wireless link.

In some embodiments of the invention, the step of providing setup data to the power source comprises providing the setup data to the power source over a wired link, for example, using a USB port or any other suitable means. That is, the user can obtain the setup data on a terminal such as a smartphone, tablet, laptop or other terminal, and transfer the setup data to the power source using the wired link, for example, a memory stick or any other suitable device.

In some embodiments of the invention, the method comprises the steps of storing at least two alternative sets of setup data in the memory of the power source, selecting one of the stored sets of setup data, and modifying the setup of the onboard control system on the basis of the selected set of setup data. That is, a user can for example store, in the memory of the power source, a library comprising different sets of setup data, and use them to selectively modify the setup of the onboard control system, so as to achieve a desired behavior of the pool cleaner, for example, in view of specific conditions, such as weather conditions, pool size and/or shape, etc.

In some embodiments of the invention, the setup data are stored in a memory, preferably a non-volatile memory, of the power source. That is, the power source can store the setup data, so that they are available at the power source when the pool cleaner becomes available for receiving the setup data (or the modification data based thereon, such as modification data derived from the setup data), for example, when the pool cleaner is powered on and/or plugged into the power source.

In some embodiments of the invention, the onboard control system is arranged to operate the pool cleaner based on data obtained from a plurality of onboard sensors of the pool cleaner, whereby the setup of the onboard control system determines at least in part the operation of the pool cleaner in response to the data obtained from the plurality of onboard sensors. That is, the response of the swimming pool cleaner to sensor output signals indicative of, for example, distance to vertical sides of the swimming pool, tilt angle, orientation in the horizontal plane, clogging of the filter, etc., is determined by the setup, and can thus be modified by modifying the setup using the method described above.

In some embodiments of the invention, the onboard control system is arranged to operate the pool cleaner in accordance with commands stored in the onboard control system, whereby the step of modifying the setup of the onboard control system comprises modifying, such as replacing, one or more of the commands. In some embodiments, the commands determine an intended path to be followed by the pool cleaner during its movement on the surface of the swimming pool, such as on the surface of the bottom and/or the walls of the swimming pools. The reference to modification of commands includes actions such as altering the sequence of commands.

A further aspect of the invention relates to a power source, such as a pool side power source or a power source floating in the swimming pool, for a pool cleaner, comprising:
a power supply for supplying electrical power to a pool cleaner via a cable;
a memory, for example, a non-volatile memory, for storing setup data for an onboard control system of a pool cleaner;
a receiver which receives the setup data from an external device, such as a user terminal; and
a communication module which communicates with and is operably coupled to the onboard control system of the pool cleaner via the cable.

The power source is configured to trigger modification of a setup of the onboard control system, the modification being based upon the stored setup data, for example, by forwarding the setup data or related such as derived data to the onboard control system.

What has been explained above in relation to the method also applies to the power source, *mutatis mutandis.*

As explained above, the expression "trigger modification" encompasses any action that results in the modification of the setup of the onboard control system, based on the transmission, from the power source to the pool cleaner, of modification data such as parameters, commands, programs or parts thereof, comprising the setup data or based on the setup data, such as derived therefrom.

In some embodiments, the power source is configured, such as programmed, to store setup data for the onboard control system of the pool cleaner in the memory, and to subsequently (that is, at a later stage) trigger modification of the setup of the onboard control system of the pool cleaner, based on the setup data. In some embodiments, the power source is configured, such as programmed, to trigger modification of the setup of the onboard control system based on the setup data, when the pool cleaner becomes available for receiving corresponding data via the cable. As explained above, frequently, pool cleaners are powered off or otherwise disconnected from the power source, for example, during storage, maintenance, etc. In many embodiments of the invention, the power source can be configured to trigger modification of the setup of the control system when receiving the corresponding data, for example, immediately or almost immediately after receiving them, if the pool cleaner is "available". If the pool cleaner is not available, the setup data can be stored in the power source, such as in a non-volatile memory thereof, and then be used to modify the setup of the control system of the pool cleaner -for example, by transferring the setup data or other data derived from the setup data- once the pool cleaner becomes available, for example, once the cable thereof is plugged into the power source and/or once the pool cleaner is turned into an "on" state. Thereby, the user or other party who desires to update or otherwise modify the setup of the control system can do so, independently of whether the pool cleaner is available or not. If the pool cleaner is not available, the relevant setup data will be stored in the power source and used to modify the setup of the control system at later stage. However, the user will not have to reinitiate the process, that is, once the user has carried out his or her part of the task operating on his or her terminal, the rest of the process can be transparent to the user, as it can be carried out between the power source and the pool cleaner. In some embodiments, the power source is configured to trigger modification of the setup of the onboard control system based on the setup data following a trigger action carried out by a user. The trigger action can comprise, for example, pushing a button, entering a code, sending a trigger command from an external device, etc.

A further aspect of the invention relates to a system comprising a power source as described above, and a pool cleaner with an onboard control system, the pool cleaner being configured for, such as programmed for, modification of the onboard control system by receiving signals over a cable interconnecting the power source and the pool cleaner, for example, based on setup data stored in a memory of the power source.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 is a schematic perspective view of a system in accordance with an embodiment of the invention implemented in correspondence with a swimming pool.
Figure 2 is a schematic perspective view of a pool cleaner in accordance with an embodiment of the invention.
Figure 3 schematically illustrates the control system integrated in a pool cleaner in accordance with an embodiment of the invention.
Figure 4 schematically illustrates the interaction between different components of a system, in accordance with an embodiment of the invention.
Figure 5 schematically illustrates some components of the power supply.
Figure 6 is a flowchart showing operation in accordance with an embodiment of the invention,

### DESCRIPTION OF A WAY OF CARRYING OUT THE INVENTION

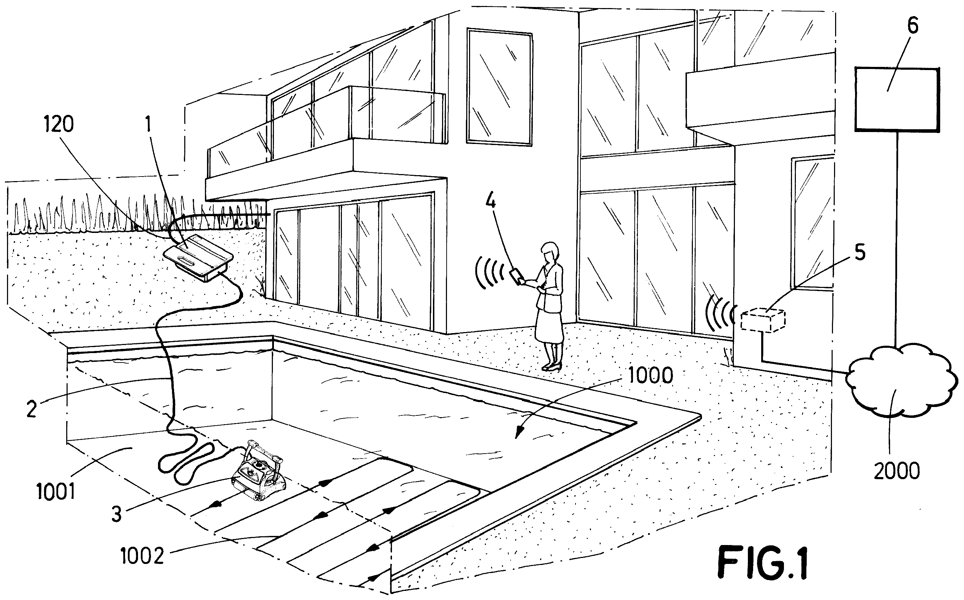

Figure 1 illustrates a pool cleaner 3 moving on the bottom surface 1001 of a swimming pool 1000, following a path 1002. The pool cleaner receives electrical power from a power source 1 via a power cable 2. The power source 1 is, in this embodiment, a pool side power source placed a couple of meters from the edge of the swimming pool, and connected to an external grid via a cable 120. That is, the power source 1 is connected between the pool cleaner by one cable 2 and to the grid by another cable. The power source 1 comprises, in the illustrated embodiment, means for wireless communication with a user terminal 4 such as smartphone or tablet computer. The user terminal 4 is provided with means for wireless communication with a local communication node 5, through which the terminal 4 can establish communication with a remote computer or computer system 6, over a network 2000.

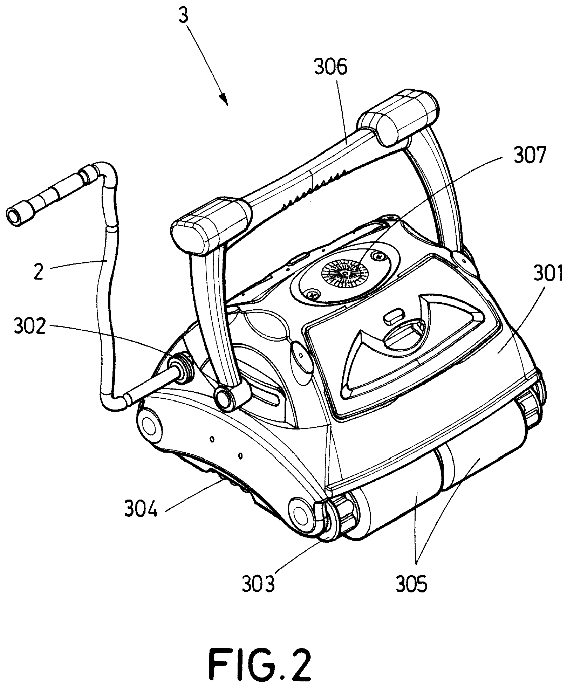

Figure 2 shows how, in this embodiment, the pool cleaner 3 comprises a housing 301, a connection 302 for receiving the power cable 2, drive wheels 303 and track 304 for moving pool cleaner 3, a brush 305 for uses known in the art, a handle 306 for uses known in the art, and a pump outlet 307 for a pump unit. Water is typically sucked in through inlets arranged in correspondence with the bottom of the pool cleaner, so that it passes through at least one filter wall of a filter assembly arranged within the pool cleaner, before exiting through the outlet 307, so that debris is retained within the pool cleaner, by the filter.

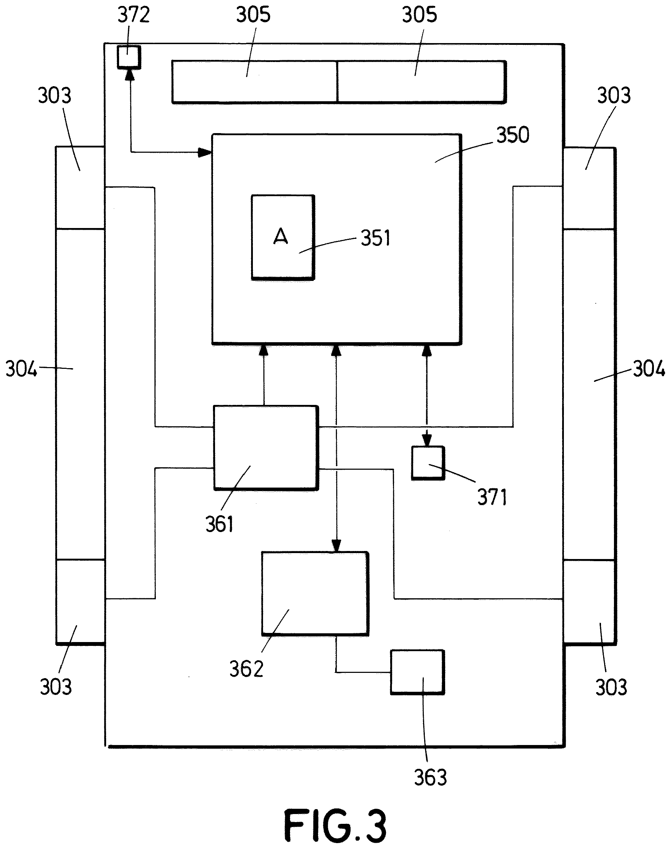

Figure 3 schematically illustrates how the pool cleaner comprises a control system 350 arranged to interact with different components of the pool cleaner so as to operate the pool cleaner in accordance with a setup of the onboard control system, the setup being schematically illustrated by a set of setup data A loaded in a memory 351 of the control system 350. The control system 350 is operatively connected to a drive motor 361 for driving the wheels 303 and track 304 and, in some embodiments, also the brush 305. The control system 350 is further operatively connected to a motor 362 for driving the pump 363. In some embodiments, one and the same motor is used for driving both the wheels and tracks and/or other means for displacing the robot and for driving the pump. In other embodiments, different motors are used. The control system operates the motors 361 and 362 in accordance with the setup of the control system, that is, in accordance with the software A loaded in the control system.

In the illustrated embodiment, the pool cleaner also includes sensors, such as a tilt sensor 371 and a proximity sensor 372, which are connected to the control system to allow the control system to read sensor data from the sensors. The reaction of the pool cleaner in response to the output from the sensors, for example, in terms of operation of one or both motors 361 and 362, and/or in terms of operation of one or both tracks 304, may depend on the setup of the control system.

Thus, the setup of the control system can determine aspects such as duration of a cleaning cycle, frequency of cleaning cycle, and operation of the drive means, for example, in order to follow a given path and/or in terms of the reaction to sensor output such as, for example, detection of proximity to a vertical wall, etc.

Further examples of sensors that may be incorporated into the pool cleaner include a sensor that detects clogging of filter walls by sensing operation parameters of the motor driving the pump. The setup of the control system can determine, for example, whether to perform a backwash operation in response to sensed operation parameters of the motor such as measured torque. In another setup of the control system, backwash can be carried out with a predetermined frequency, independently of how the pump motor operates.

A given setup of the pool cleaner may be considered preferred under certain circumstances, for example, given a certain swimming pool size or type, given a certain time of the year, etc. Thus, sometimes a user may wish to modify the setup, for example, to increase the frequency and/or duration of the cleaning cycles carried out by the pool cleaner.

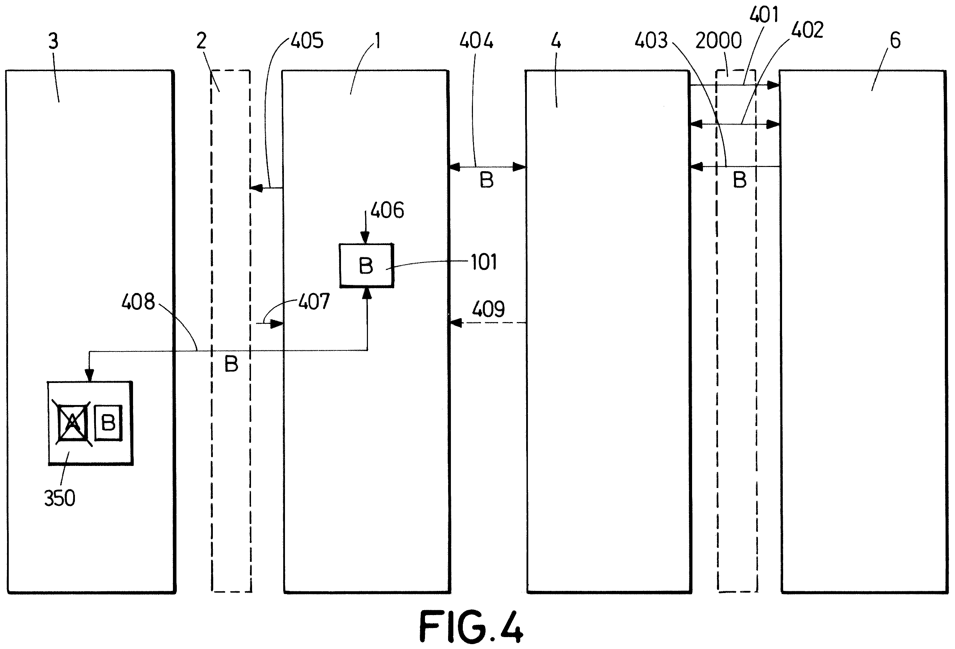

Figure 4 shows how a user, from a user terminal 4, establishes 401 a session accessing an external computer system 6 over a network 6 such as the internet. The user can, for example, accesses a computer program incorporating a graphical user interface, and select parameters based on the pool in which the robot will operate. A session 402 is established between the user and the external computer system, whereby the user, using for example a graphical interface program, selects certain parameters, and receives pool cleaner control system setup data B from the external computer system 6. For example, the user can provide parameters such as size and shape of a swimming pool to a computer system 6 related to the manufacturer or supplier of the pool cleaner, and receive 403 setup data B that, when loaded into the control system of the pool cleaner, causes the pool cleaner to operate in a manner considered appropriate for a swimming pool featuring these parameters.

Next, a session 404 of communication is established between the user terminal 4 and the power source 1. Here, the setup data B are forwarded from the user terminal 4 to the power source 1, together with instructions to upload the setup data B to the pool cleaner 3.

In the following step, the power source attempts 405 to establish a session with the pool cleaner, but detects that the pool cleaner is not available, for example, because it is turned off or because the cable 2 is not connected to the power source 1 (for example, because the pool cleaner is stored somewhere else, in use in another swimming pool, etc.). The power source then stores 406 the setup data B in an internal memory 101 of the power source.

When the power source 1 detects 407 that the pool cleaner 3 is available for receiving the setup data, a session 408 is established between the power source 1 and the pool cleaner 3, whereby the setup data B are transferred from the memory 101 of the power source 1 to the control system 350 of the pool cleaner, via the power cable 2, for example, replacing previous setup data A and thereby modifying the way in which the pool cleaner 3 will operate.

In some embodiments, the power source 1 does not initiate steps 405 or 408 before receiving instructions 409 from the user terminal 4 indicating that the setup data B are to be transferred to the pool cleaner. That is, in some embodiments, setup data B are stored in the memory 101 of the power source, until the user triggers 409 transfer to the pool cleaner.

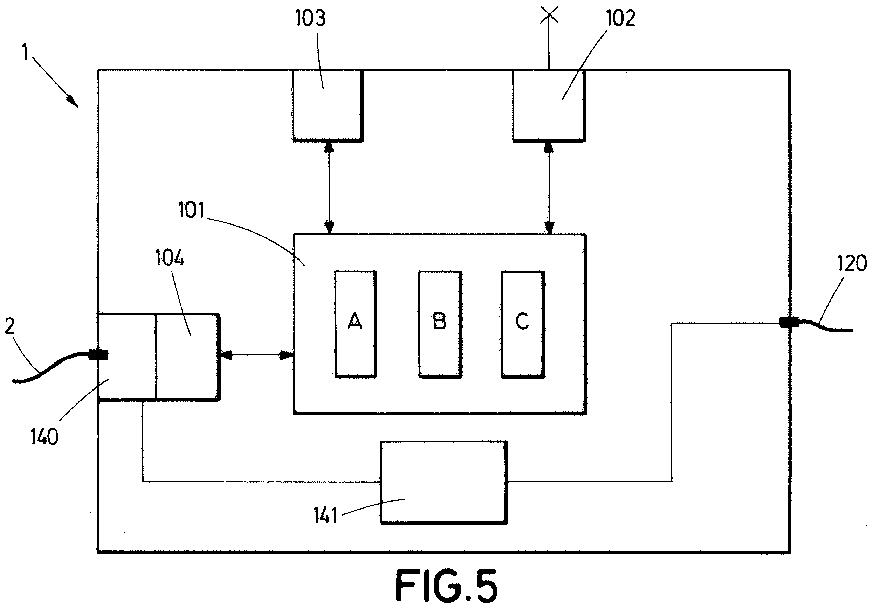

Figure 5 schematically illustrates the layout of a power source 1 in accordance with an embodiment of the invention. The power source 1 is connectable to an electrical network (not shown, but typically the general supply grid) via a cable 120. This cable connects the electrical network to internal power supply means 141 of the power source 1, which are connectable to the power supply cable 2 of the pool cleaner via a power interface 140. So far, the power source can be constituted substantially as a conventional power source of the type that is used to supply power to a pool cleaner while receiving power from the grid.

However, in this embodiment of the invention, the power source 1 further includes means 102 for wireless communication (for example, adapted for communication according to a protocol such as wifi or Bluetooth) and means 103 for wired communication (such as a USB port). Thereby, communication with a user terminal 4 is possible, allowing the user to forward the setup data B to the power source, to be forwarded to the pool cleaner 1 or stored in the memory 101 of the power source. From this memory 101, the setup date can be uploaded to the pool cleaner 1 via the cable 2, via a communication interface 104 operatively connected with the power interface 140.

Figure 5 schematically illustrates how a plurality of sets of setup data A, B and C are stored in the memory 101 of the power source 1. This is so in accordance with an embodiment, in which a user can obtain different sets of setup data and store them in the memory of the power source. Thereafter, whenever desired, for example, depending on the weather, the time of the year, the kind of swimming pool to be cleaned, etc., the user can upload a selected one of said sets to the pool cleaner, thereby modifying the way in which it will operate.

In some embodiments of the invention, the user can choose between an immediate update option, in which the new setup data are uploaded directly to the pool cleaner, if it is available for such an upload, and a delayed update option, in which the setup data are stored in the power source until a trigger action is performed by the user, triggering the upload.

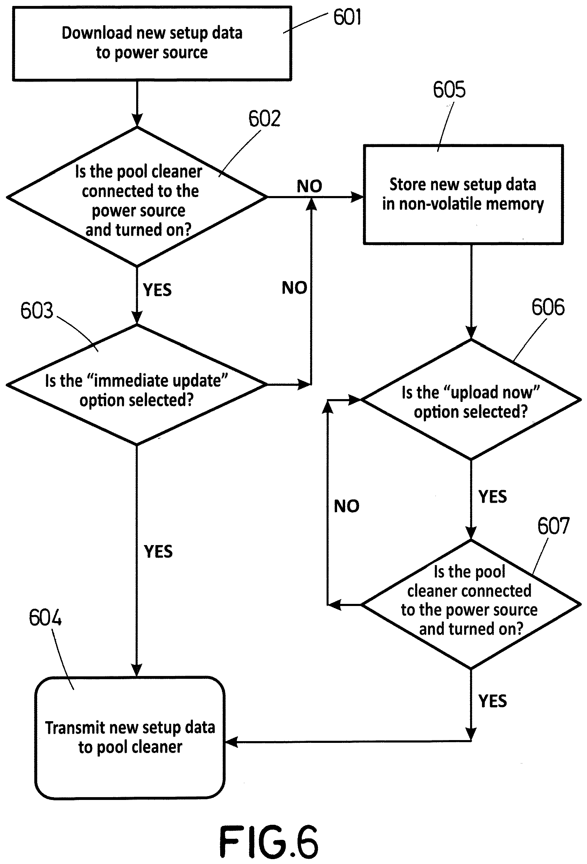

One example of such an embodiment is illustrated in figure 6. In a first step 601 the user uploads, from a user terminal or other suitable means, the relevant setup data to the power source. The power source verifies 602 if the pool cleaner is available for uploading the setup data via the power cable and, if it is, the power source verifies 603 if an "immediate update" option has been selected. If the outcome of these two verifications is positive, the power source transmits 604 the new setup data to the pool cleaner, thereby updating the setup of the control system thereof. If the outcome of one of the two verifications is negative, the new setup data are stored 605 in the memory of the pool cleaner.

At this stage, the user can then trigger an upload of the setup data to the pool cleaner by selecting an "upload now" option. While this option is selected 606, the power source monitors 607 the connection to the pool cleaner to detect when the pool cleaner is connected to the power source and turned on and, once turned on, transmits the setup data to the pool cleaner, thereby updating the control system thereof.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method for modifying a setup of an onboard control system of an automatic pool cleaner (3), the onboard control system (350) being configured to operate the pool cleaner in accordance with the setup of the onboard control system (350), the pool cleaner (3) being an electrically powered pool cleaner configured for receiving electrical power via a cable (2) connecting the pool cleaner to a power source (1), **characterised in that** the method comprises:
providing setup data (B) to the power source (1), and
modifying the setup of the onboard control system from the power source (1) via the cable (2), based on the setup data (B).

2. The method according to claim 1, wherein, after receiving the setup data, the power source (1) selectively:
- triggers modification of the setup of the onboard control system (350) of the pool cleaner (3) if the pool cleaner is available for receiving corresponding data via the cable (2); or
- stores the setup data in a memory (101) of the power source (1) if the pool cleaner (3) is not available for receiving the corresponding data via the cable, and subsequently triggers modification of the setup of the onboard control system (350) of the pool cleaner (3) based on the stored setup data, when the pool cleaner (3) becomes available for receiving the corresponding data via the cable (2).

3. The method according to any of the preceding claims, wherein the setup data (B) are stored in a memory (101) of the power source (1), and wherein the step of modifying the setup of the onboard control system (350) is carried out in response to a trigger action (409) carried out by a user.

4. The method according to any of the preceding claims, wherein the step of providing setup data to the power source (1) comprises selecting (402) operating parameters using an interface program running on a terminal external to the power source (1).

5. The method according to any of the preceding claims, wherein the power source (1) includes means (102) for wireless communication, and wherein the step of providing setup data to the power source comprises providing the setup data to the power source (1) over a wireless link, via the means (102) for wireless communication.

6. The method according to any of claims 1-4, wherein the step of providing setup data to the power source (1) comprises providing the setup data to the power source over a wired link (103).

7. The method according to any of the preceding claims, comprising the steps of storing at least two alternative sets (A, B, C) of setup data in the memory (101) of the power source (1), selecting one of the stored sets of setup data, and modifying the setup of the onboard control system (350) on the basis of the selected set of setup data.

8. The method according to any of claims 1-6, wherein the setup data are stored in a memory (101) of the power source (1).

9. The method according to any of the preceding claims, wherein the onboard control system (350) is arranged to operate the pool cleaner (3) based on data obtained from a plurality of onboard sensors (371, 372) of the pool cleaner, whereby the setup of the onboard control system (350) determines at least in part the operation of the pool cleaner in response to the data obtained from the plurality of onboard sensors (371, 372).

10. The method according to any of the preceding claims, wherein the onboard control system (350) is arranged to operate the pool cleaner (3) in accordance with commands stored in the onboard control system, whereby the step of modifying the setup of the onboard control system comprises modifying one or more of the commands.

11. A power source for a pool cleaner, comprising
a power supply (140, 141) for supplying electrical power to a pool cleaner via a cable (2),
**characterised in that** the power source further comprises:
a memory (101) for storing setup data for an onboard control system of the pool cleaner,
a receiver (102, 103) which receives the setup data from an external device (4), and
a communication module (104) which communicates with and is operably coupled to the onboard control system (350) of the pool cleaner via the cable (2);
wherein the power source (1) is configured to trigger modification of a setup of the onboard control system (350), the modification being based upon the stored setup data.

12. The power source according to claim 11, configured to store setup data for the onboard control system of the pool cleaner in the memory (101), and to subsequently trigger modification of the setup of the onboard control system (350) of the pool cleaner, based on the setup data.

13. The power source according to claim 12, configured to trigger modification of the setup of the onboard control system (350) based on the setup data, when the pool cleaner becomes available for receiving data via the cable (2).

14. The power source according to claim 12 or 13, configured to trigger modification of the setup of the onboard control system based on the setup data following a trigger action (409) carried out by a user.

15. A system comprising a power source (1) according to any of claims 11-14, and a pool cleaner (3) with an onboard control system (350), the pool cleaner being configured for modification of the onboard control system (350) by receiving signals over a cable (2) interconnecting the power source (1) and the pool cleaner (3).
